# EUROPEAN PATENT SPECIFICATION

(11) **EP 3 995 322 B1**
(45) Date of publication and mention of the grant of the patent: **12.06.2024**
(21) Application number: 20904657.2
(22) Date of filing: 26.10.2020
(51) Int. Cl.: B60C 9/20, D07B 1/06, B60C 9/00

(54) **TIRE AND BELT LAYER**
REIFEN UND GÜRTELSCHICHT
PNEU ET COUCHE DE CEINTURE

(30) Priority: 25.12.2019 JP 2019234856
(43) Date of publication of application: 11.05.2022
(73) Proprietor: Sumitomo Rubber Industries, Ltd., Kobe-shi, Hyogo 651-0072 (JP)
(72) Inventor: MIAO, Dong, Kobe-shi, Hyogo 651-0072 (JP); SUZUKI, Masumi, Kobe-shi, Hyogo 651-0072 (JP)
(74) Representative: Manitz Finsterwald Patent- und Rechtsanwaltspartnerschaft mbB
(86) International application number: PCT/JP2020/040070
(87) International publication number: WO 2021/131295

(56) References cited:
- JP-A- H1 025 675
- JP-A- H07 117 406
- JP-A- 2001 328 407
- JP-A- 2003 063 209
- JP-A- 2003 170 703
- JP-A- 2004 204 391
- JP-A- 2006 111 104
- JP-A- 2017 185 984
- JP-A- 2018 058 515
- JP-U- H0 546 997

## Description

### [FIELD OF THE INVENTION]

The present invention relates to a belt for a tire and a tire provided with such belt layer in a tread portion.

### [BACKGROUND OF THE INVENTION]

Conventionally, tires using belt cords made of steel single wires each having a flat cross-sectional shape in the belt layer have been known. For example, Patent Document 1 below has proposed a pneumatic tire that maintains good durability against belt breakage by embedding a belt layer with an array of single-wire steel wires having a flat cross-sectional shape.

### [Prior Art Documents]

### [Patent Documents]

[Patent Document 1]
Japanese Unexamined Patent Application Publication No. 2018-058515;

### [Further Patent Documents]

JP 2003-170703 A discloses a tire comprising a tread portion and a belt layer disposed in the tread portion. The belt layer includes at least one belt ply which includes a plurality of belt cords including a steel single wire having a flat cross-sectional shape, and in at least one of the belt cords, the steel single wire has a short diameter direction inclined at an angle of at least 60 degrees with respect to a thickness direction of the belt ply. The steel single wire has a ratio of 0.70 or less between a short diameter and a long diameter in the cross-sectional shape. The belt cords include a first and second belt cords for which the respective steel single wires have their short diameter directions inclined to opposite sides. Five belt cords adjacent in the tire axial direction include at least one first belt cord and at least one second belt cord.
JP 2003-063209 A discloses a tire comprising features according to a related technology, wherein the respective steel single wires of the belt cords have a short diameter direction inclined at an angle of 45 to 135 degrees with respect to a thickness direction of the belt ply, and the short diameter directions are inclined to the same side.
JP 2006-111104 A discloses a tire comprising features according to a related technology. JP 2004-204391 A also discloses a tire comprising features according to a related technology, wherein the short diameter of the steel single wire may be 0.25mm or 0.35mm, for example.
JP 2018-58515 A discloses a tire comprising features according to a related technology, wherein a steel single wire of a belt cord has a short diameter direction being aligned with a thickness direction of a belt ply which comprises the belt cord.
JP 5-46997 U1 discloses a tire comprising features according to a related technology.
JP 2001-328407 A also discloses a tire comprising features according to a related technology.
JP 2017-185984 A discloses a tire comprising a belt ply which includes a topping rubber covering belt cords which each include two wires, and the topping rubber has a complex elastic modulus (E*) at 70 degrees Celsius of 8 to 12 MPa.

### [SUMMARY OF THE INVENTION]

### [Problems to be solved by the Invention]

However, the distance between the single-wire steel wires in the pneumatic tire of Patent Document 1 is small, and cracks generated in the area can grow and damage the belt layer, therefore, there has been a demand for further improvement in durability performance.

The present invention has been made in view of the above, and a primary object thereof is to provide a belt layer for a tire capable of improving steering stability performance, ride comfort performance, and the durability performance in a good balance and to provide a tire with such belt.

### [Means for Solving the Problems]

The object is achieved with a belt layer for a tire and with a tire comprising such belt layer having the features of claim 1 and claim 2, respectively. Subclaims are directed to preferable embodiments.

The present invention is a belt layer for a tire, wherein the belt layer includes at least one belt ply, the belt ply includes a plurality of belt cords including a steel single wire having a flat cross-sectional shape, and in at least one of the belt cords, the steel single wire has a short diameter direction inclined at an angle of 10 to 35 degrees with respect to a thickness direction of the belt ply.

In the present invention, the steel single wire has a short diameter (SD) of 0.15 to 0.42 mm in the cross-sectional shape.

In the present invention, the steel single wire has a ratio (SD/LD) of 0.70 or less between a short diameter (SD) and a long diameter (LD) in the cross-sectional shape.

In the tire of the present invention, it is preferred that the steel single wire has a ratio (SD/LD) of 0.50 or more between a short diameter (SD) and a long diameter (LD) in the cross-sectional shape.

In the present invention, the belt cords include a first belt cord having the steel single wire having the short diameter direction inclined to a first side with respect to the thickness direction of the belt ply and a second belt cord having the steel single wire having the short diameter direction inclined to a second side opposite to the first side with respect to the thickness direction of the belt ply.

In the tire of the present invention, it is preferred that the steel single wire of the first belt cord and the steel single wire of the second belt cord are inclined at the same angle to opposite sides to each other.

In the tire of the present invention, it is preferred that the belt cords further include a third belt cord having the steel single wire having the short diameter direction oriented along the thickness direction of the belt ply.

In the present invention, five belt cords adjacent in the tire axial direction include at least one first belt cord and at least one second belt cord.

In the present invention, the belt ply includes a topping rubber covering the belt cords, and the topping rubber has a complex elastic modulus (E*) at 70 degrees Celsius of 7 to 20 MPa.

The present invention is a belt layer disposed in a tread portion including at least one belt ply, wherein the belt ply includes a plurality of belt cords including a steel single wire having a flat cross-sectional shape, and in at least one of the belt cords, the steel single wire has a short diameter direction inclined at an angle of less than 90 degrees with respect to a thickness direction of the belt ply.

### [Effects of the Invention]

In the tire of the present invention, the belt ply includes a plurality of the belt cords including the steel single wire having the flat cross-sectional shape, and in at least one of the belt cords, the steel single wire has the short diameter direction inclined at the angle of less than 90 degrees with respect to the thickness direction of the belt ply.

It is possible that the belt ply configured as such increases the distance between the steel single wires, therefore, stress in the portion is relieved, thereby, the occurrence of cracks in the portion is suppressed, therefore, it is possible that the durability performance is improved. Thereby, it is possible that the tire of the present invention improves the steering stability performance, the ride comfort performance, and the durability performance in a good balance.

In the belt layer of the present invention, the belt ply includes a plurality of the belt cords including the steel single wire having the flat cross-sectional shape, and in at least one of the belt cords, the steel single wire has the short diameter direction inclined at the angle of less than 90 degrees with respect to the thickness direction of the belt ply.

It is possible that the belt ply configured as such increases the distance between the steel single wires, therefore, stress in the portion is relieved, thereby, the occurrence of cracks in the portion is suppressed, therefore, it is possible that the durability performance is improved. Thereby, it is possible that the belt layer of the present invention improves the steering stability performance, the ride comfort performance, and the durability performance in a good balance.

### [BRIEF DESCRIPTION OF THE DRAWINGS]

FIG. 1 is a cross-sectional view showing a tire according to an embodiment of the present invention.
FIG. 2 is a cross-sectional view of a belt ply.
FIG. 3 is a cross-sectional view of the belt ply according to another embodiment of the present invention.

### [DETAILED DESCRIPTION OF THE INVENTION]

An embodiment of the present invention will now be described in conjunction with accompanying drawings.

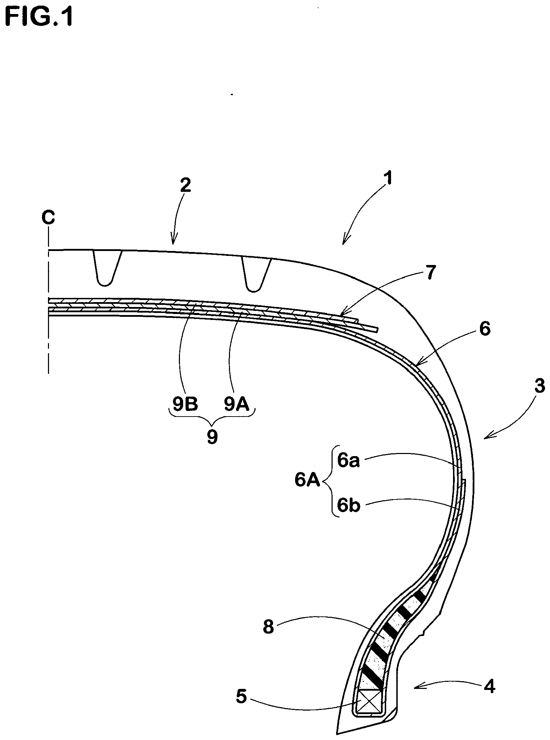

FIG. 1 is a tire meridian section of a tire 1 passing through a rotational axis of the tire 1 in a standard state. The tire 1 of the present embodiment is suitable for use as a rubber pneumatic tire to be mounted on passenger cars and the like. It should be noted that the tire 1 is not limited to rubber pneumatic tires for passenger cars, but can be applied to a variety of tires, such as heavy-duty pneumatic tires, plastic pneumatic tires, and non-pneumatic tires not filled with pressurized air therein, for example.

Here, in the case where the tire 1 is a rubber pneumatic tire, the "standard state" is a state in which the tire 1 is mounted on a standard rim, inflated to a standard inner pressure, and loaded with no tire load. In the following, unless otherwise mentioned, the dimensions of various parts of the tire 1 are the values measured in this standard state.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" is air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

As shown in FIG. 1, the tire 1 of the present embodiment includes a tread portion 2 extending annularly, a pair of sidewall portions 3 extending on both sides of the tread portion 2, and a pair of bead portions 4 extending in connection with the sidewall portions 3. The tire 1 of the present embodiment has a toroidal carcass 6 extending between bead cores 5 of the pair of the bead portions 4, and a belt layer 7 arranged radially outside the carcass 6 and inside the tread portion 2.

The carcass 6 includes at least one carcass ply, in the present embodiment one carcass ply 6A. The carcass ply 6A includes carcass cords (not shown) arranged at an angle of 75 to 90 degrees with respect to a tire circumferential direction, for example. Organic fiber cords such as aromatic polyamide or rayon and the like can be employed as the carcass cords, for example.

The carcass ply 6A includes a main body portion (6a) extending between the pair of the bead cores 5, and turned-up portions (6b) connected to the main body portion (6a) and each turned up from the inside to the outside in a tire axial direction around a respective one of the bead cores 5, for example. A bead apex rubber 8 extending outward in a tire radial direction from each of the bead cores 5 is disposed between the main body portion (6a) and each of the turned-up portions (6b) of the carcass ply 6A, for example.

The belt layer 7 includes at least one belt ply, in the present embodiment two belt plies 9. The two belt plies 9 include a first belt ply 9A arranged radially inside and a second belt ply 9B arranged radially outside the first belt ply 9A, for example. The belt layer 7 configured a such increases rigidity of the tread portion 2, therefore, it is possible that the durability performance of the tire 1 is improved.

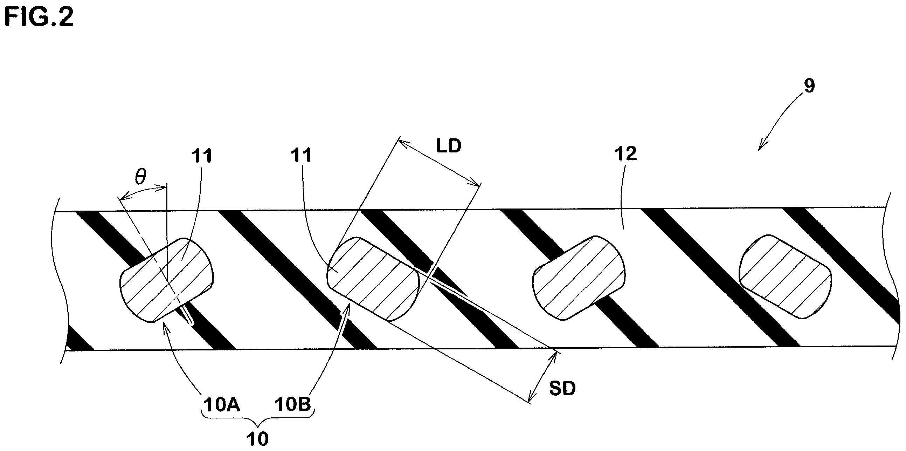

FIG. 2 is an enlarged cross-sectional view of the belt plies 9. As shown in FIG. 2, at least one of the belt plies 9 of the present embodiment includes a plurality of belt cords 10 including steel single wires 11 having a flat cross-sectional shape and a topping rubber 12 covering the belt cords 10. The belt cords 10 configured as such can improve the strength of belt layer 7 without excessively increasing the rigidity thereof, therefore, it is possible that both the steering stability performance and the ride comfort performance of the tire 1 are achieved.

In at least one of the belt cords 10, a short diameter direction of the steel single wire 11 is inclined at an angle θ of less than 90 degrees with respect to a thickness direction of the belt ply 9. The belt plies 9 configured as such can increase the distance between the steel single wires 11, therefore, stress in the area is relieved, thereby, the occurrence of delamination originating from edges of the belt plies 9 is suppressed, therefore, it is possible that the durability performance of the tire 1 is improved. Thereby, it is possible that the tire 1 of the present embodiment improves the steering stability performance, the ride comfort performance, and the durability performance in a good balance.

From such a point of view, the angle θ of the belt cords 10 is in the range of 10 to 35 degrees. Each of the belt cords 10 is inclined at the same angle θ, for example. The angle θ of the belt cords 10 may be different for each of the steel single wires 11.

When the angle θ of the belt cords 10 is different for each of the steel single wires 11, it is preferred that the average value of the angles θ of the steel single wires 11 is within the above ranges, and it is more preferred that the angle θ of each of the steel single wires 11 is within the above ranges. It is possible that the belt plies 9 containing the steel single wires 11 configured as such significantly improve the durability performance of the tire 1 while good steering stability performance and good ride comfort performance of tire 1 are maintained.

Each of the steel single wires 11 has a short diameter SD in the cross-sectional shape of 0.15 to 0.42 mm. Since the short diameter SD of each of the steel single wires 11 is 0.15 mm or more, the strength of the steel single wires 11 is maintained, therefore, it is possible that the durability performance of the tire 1 is improved. Since the short diameter SD of each of the steel single wires 11 is 0.42 mm or less, excessive increase in the rigidity of the belt layer 7 is suppressed, therefore, it is possible that the ride comfort performance is improved.

In the cross-sectional shape of each of the steel single wires 11, a ratio (SD/LD) of the short diameter SD and a long diameter LD is 0.70 or less. Since the ratio (SD/LD) of the steel single wires 11 is 0.70 or less, excessive increase in the rigidity of the belt layer 7 is suppressed, therefore, it is possible that the ride comfort performance of the tire 1 is improved.

In the cross-sectional shape of each of the steel single wires 11, it is preferred that the ratio (SD/LD) of the short diameter SD and the long diameter LD is 0.50 or more. Since the ratio (SD/LD) of the steel single wires 11 is 0.50 or more, it is possible that the length of the short diameter SD is increased, and as a result, the strength of the steel single wires 11 is maintained, thereby, it is possible that the durability performance of the tire 1 is improved.

The belt cords 10 include first belt cords 10A in which the short diameter direction of the steel single wires 11 is inclined to a first side with respective to the thickness direction of the belt ply 9. The belt cords 10 further include second belt cords 10B in which the short diameter direction of the steel single wires 11 is inclined to a second side opposite to the first side with respective to the thickness direction of the belt ply 9. In the belt plies 9 configured as such, the direction of stress associated with the inclination of steel single wires 11 is equalized, therefore, it is possible that the steering stability performance in the tire axial direction is improved.

The second belt cords 10B of the present embodiment are inclined to the opposite side to the first belt cords 10A at the same angle θ as the first belt cords 10A. In other words, the steel single wires 11 of the first belt cords 10A and the steel single wires 11 of the second belt cords 10B are inclined in opposite sides with the same angle θ.

In the case in which the angle θ is different for each of the steel single wires 11, it is preferred that the average value of the angles θ of the steel single wires 11 in the first belt cords 10A and the average value of the angles θ of the steel single wires 11 in the second belt cords 10B are substantially equal. It is possible that the belt cords 10 configured as such further improve the steering stability performance in the tire axial direction.

The topping rubber 12 has a complex elastic modulus (E*) at 70°C in the range of 7 to 20 MPa. Since the complex elastic modulus (E*) of the topping rubber 12 is 7 MPa or more, the distortion of the topping rubber 12 is suppressed, therefore, it is possible that the durability performance of the tire 1 is improved. Since the complex elastic modulus (E*) of the topping rubber 12 is 20 MPa or less, excessive increase in the rigidity of the belt layer 7 is suppressed, therefore, it is possible that the ride comfort performance of the tire 1 is improved.

Here, the complex elastic modulus (E*) at 70°C of the topping rubber 12 was measured in accordance with Japanese Industrial Standard JIS-K6394 under the following conditions by using a dynamic viscoelasticity measurement device (EPLEXOR series) manufactured by GABO QUALIMETER Testanlagen GmbH.
Initial strain: 10%
Amplitude of dynamic strain: ±1%
Frequency: 10Hz
Deformation mode: tensile
Measurement temperature: 70°C

The rubber composition of the topping rubber 12 is not particularly limited in its formulation as long as the complex elastic modulus (E*) is within the above range. The rubber components used in the topping rubber 12 include, for example, natural rubber (NR), isoprene-based rubber such as isoprene rubber (IR), and diene-based rubber such as butadiene rubber (BR), styrene-butadiene rubber (SBR), styrene-isoprene-butadiene rubber (SIBR), chloroprene rubber (CR), acrylonitrile butadiene rubber (NBR) and the like. As the rubber component of the topping rubber 12, natural rubber (NR) or natural rubber (NR) combined with isoprene rubber (IR) is preferred from the point of view of the durability performance.

The topping rubber 12 may contain additional cobalt organic acid salts, for example. The cobalt organic acid salts include, for example, cobalt stearate, cobalt naphthenate, cobalt neodecanoate, cobalt boron tri-neodecanoate, and the like. The topping rubber 12 configured as such is cross-linked with belt cords 10 by cobalt elements during vulcanization molding, therefore, it is possible that the adhesion of the topping rubber 12 with the belt cords 10 is improved.

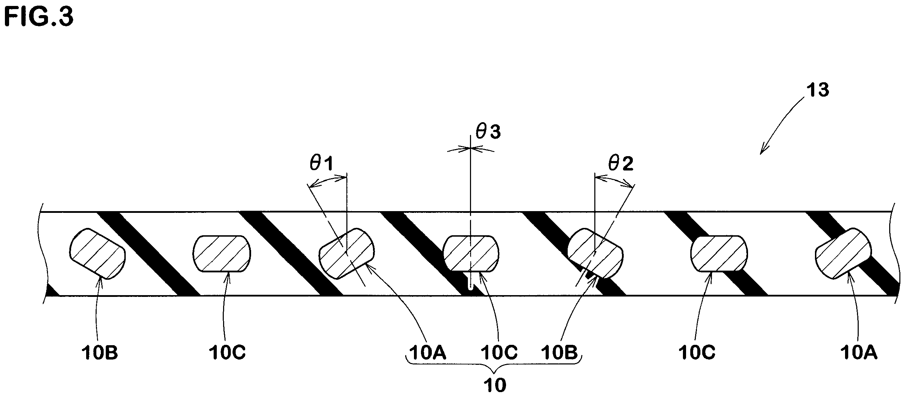

FIG. 3 is an enlarged cross-sectional view of a belt ply 13 according to another embodiment. As shown in FIG. 3, the belt cords 10 of the belt plies 13 of the present embodiment include the first belt cords 10A, the second belt cords 10B, and third belt cords 10C in which the short diameter direction of the steel single wires 11 is oriented along the thickness direction of the belt ply 9.

In the first belt cords 10A of the present embodiment, the short diameter direction of the steel single wires 11 is inclined to the first side at a first angle θ1 of less than 90 degrees with respect to the thickness direction of the belt plies 9. Further, in the second belt cords 10B, the short diameter direction of the steel single wires 11 is inclined to the second side at a second angle θ2 of less than 90 degrees with respect to the thickness direction of the belt plies 9.

In the third belt cords 10C, it is preferred that the short diameter direction of the steel single wires 11 is inclined at a third angle θ3 of within ±5 degrees with respect to the thickness direction of the belt plies 9. The belt plies 13 configured as such have a good-balanced bending rigidity, therefore, it is possible that the steering stability performance, the ride comfort performance, and the durability performance of the tire 1 are improved in a good balance.

In the present embodiment, the first angle θ1 of the first belt cords 10A and the second angle θ2 of the second belt cords 10B are substantially equal. If the number of the first belt cords 10A is equal to the number of the second belt cords 10B, it is preferred that the average value of the first angles θ1 is at least equal to the average value of the second angles θ2. It is possible that the belt plies 13 including the belt cords 10 configured as such further improve the steering stability performance in the tire axial direction.

As shown in FIGs. 2 and 3, five belt cords 10 adjacent in the tire axial direction include at least one first belt cord 10A and at least one second belt cord 10B. The belt plies 9 and 13 including the belt cords 10 configured as such help to improve the steering stability performance, the ride comfort performance, and the durability performance of the tire 1 in a good balance.

While detailed description has been made of an especially preferred embodiment of the present invention, the present invention can be embodied in various forms within the scope of the appended claims.

### [Examples]

Tires having the tire meridian cross section shown in FIG. 1 were made by way of test according to the specifications listed in Tables 1 and 2. The test tires were evaluated for the steering stability performance, the ride comfort performance, and the durability performance. The common specifications and test methods for the test tire are as follows.

### < Common Specification >

Test vehicle: front wheel drive mid-size passenger car
Tire size: 195/65R15
Tire inner pressure: 230 kPa

### < Steering Stability Performance >

While a test driver alone drove the test vehicle with the test tires mounted on all wheels thereof on a test course, the test driver evaluated the steering stability performance by the test driver's feeling. The results are indicated by an index based on Reference 1 being 100, wherein a larger numerical value shows better steering stability performance.

### < Ride Comfort Performance >

While the test driver alone drove the test vehicle with the test tires mounted on all wheels thereof on the test course, the test driver evaluated the ride comfort performance by the test driver's feeling. The results are indicated by an index based on Reference 1 being 100, wherein a larger numerical value shows better ride comfort performance.

### < Durability Performance >

The test tires were mounted on a bench durability testing machine and the running distance until the tires were damaged was measured. The results are indicated by an index based on Reference 1 being 100, wherein the larger the numerical value, the longer the running distance is, which shows better durability performance.

### < Overall Evaluation >

As an overall evaluation of the steering stability performance, the ride comfort performance, and the durability performance, the average values of the steering stability performance, the ride comfort performance, and the durability performance were calculated. The results are indicated by an index based on Reference 1 being 100, wherein a larger numerical value shows that the steering stability performance, the ride comfort performance, and the durability performance are improved in a better balance.

The test results are shown in Table 1 and Table 2.

**Table 1**

| | | Ref.1 | Ref. 2 | Ex.1 | Ex.2 | Ex.3 | Ex.4 | Ex.5 | Ex.6 | Ex.7 | Ex.8 |
|---|---|---|---|---|---|---|---|---|---|---|---|
| Arrangement of Belt cords | | - | - | Fig.2 | Fig.2 | Fig.2 | Fig.2 | Fig.2 | Fig.2 | Fig.2 | Fig.2 |
| Angle θ of Belt cord | [degree] | - | 0 | 5 | 10 | 15 | 20 | 25 | 30 | 35 | 40 |
| Ratio (SD/LD) of Short diameter SD and Long diameter LD of Steel single wire | | 1 | 0.60 | 0.60 | 0.60 | 0.60 | 0.60 | 0.60 | 0.60 | 0.60 | 0.60 |
| Short diameter SD of Steel single wire | [mm] | 0.42 | 0.30 | 0.30 | 0.30 | 0.30 | 0.30 | 0.30 | 0.30 | 0.30 | 0.30 |
| Complex elastic modulus (E*) of Topping rubber | [MPa] | 12 | 12 | 12 | 12 | 12 | 12 | 12 | 12 | 12 | 12 |
| Steering stability performance | [index] | 100 | 101 | 101 | 100 | 99 | 99 | 98 | 98 | 97 | 95 |
| Ride comfort performance | [index] | 100 | 114 | 113 | 113 | 111 | 109 | 108 | 105 | 102 | 101 |
| Durability performance | [index] | 100 | 95 | 100 | 104 | 107 | 108 | 109 | 111 | 113 | 115 |
| Overall evaluation | [index] | 100 | 103 | 105 | 106 | 106 | 105 | 105 | 105 | 104 | 104 |

**Table 2**

| | | Ex.9 | Ex.10 | Ex.11 | Ex.12 | Ex. 13 | Ex.14 | Ex.15 | Ex.16 | Ex.17 | Ex. 18 |
|---|---|---|---|---|---|---|---|---|---|---|---|
| Arrangement of Belt cords | | Fig.2 | Fig.2 | Fig.2 | Fig.2 | Fig.2 | Fig.2 | Fig.2 | Fig.2 | Fig.3 | Fig.3 |
| Angle θ of Belt cord | [degree] | 45 | 50 | 15 | 15 | 15 | 15 | 15 | 15 | 15 | 35 |
| Ratio (SD/LD) of Short diameter SD and Long diameter LD of Steel single wire | | 0.60 | 0.60 | 0.50 | 0.70 | 0.60 | 0.60 | 0.60 | 0.60 | 0.60 | 0.60 |
| Short diameter SD of Steel single wire | [mm] | 0.30 | 0.30 | 0.30 | 0.30 | 0.20 | 0.40 | 0.30 | 0.30 | 0.30 | 0.30 |
| Complex elastic modulus (E*) of Topping rubber | [MPa] | 12 | 12 | 12 | 12 | 12 | 12 | 5 | 22 | 12 | 12 |
| Steering stability performance | [index] | 93 | 91 | 95 | 104 | 100 | 105 | 98 | 103 | 102 | 99 |
| Ride comfort performance | [index] | 100 | 99 | 112 | 109 | 115 | 103 | 114 | 98 | 102 | 97 |
| Durability performance | [index] | 117 | 119 | 108 | 99 | 104 | 103 | 99 | 110 | 109 | 118 |
| Overall evaluation | [index] | 103 | 103 | 105 | 104 | 106 | 104 | 104 | 104 | 104 | 105 |

From the test results, it was confirmed that the tires in Examples were capable of improving the steering stability performance, the ride comfort performance, and the durability performance in a good balance compared with the tires in References.

### [Description of Reference Signs]

- 1: tire
- 2: tread portion
- 7: belt layer
- 9: belt ply
- 10: belt cord
- 11: steel single wire

## Claims

1. A belt layer (7) for a tire (1), wherein the belt layer (7) comprising at least one belt ply (9), wherein
the belt ply (9) includes a plurality of belt cords (10) including a steel single wire (11) having a flat cross-sectional shape, and
in at least one of the belt cords (10), the steel single wire (11) has a short diameter direction inclined at an angle (Θ) of 10 to 35 degrees with respect to a thickness direction of the belt ply (9),
the steel single wire (11) has a short diameter (SD) of 0.15 to 0.42 mm in the cross-sectional shape,
the steel single wire (11) has a ratio (SD/LD) of 0.70 or less between a short diameter (SD) and a long diameter (LD) in the cross-sectional shape,
the belt cords (10) include a first belt cord (10A) having the steel single wire (11) having the short diameter direction inclined to a first side with respect to the thickness direction of the belt ply (9) and a second belt cord (10B) having the steel single wire (11) having the short diameter direction inclined to a second side opposite to the first side with respect to the thickness direction of the belt ply (9),
five belt cords (10) adjacent in the tire axial direction include at least one first belt cord (10A) and at least one second belt cord (10B), and
the belt ply (9) includes a topping rubber (12) covering the belt cords (10), and
the topping rubber (12) has a complex elastic modulus (E*) at 70 degrees Celsius of 7 to 20 MPa, wherein the complex elastic modulus is measured in accordance with Japanese Industrial Standard JIS-K6394 under the conditions of initial strain 10%, amplitude of dynamic strain ±1%, frequency 10Hz and deformation mode tensile.

2. A tire (1) comprising a tread portion (2) and a belt layer (7) according to claim 1 disposed in the tread portion (2).

3. The tire (1) according to claim 2, wherein the steel single wire (11) has a ratio (SD/LD) of 0.50 or more between a short diameter (SD) and a long diameter (LD) in the cross-sectional shape.

4. The tire (1) according to claim 2 or 3, wherein the steel single wire (11) of the first belt cord (10A) and the steel single wire (11) of the second belt cord (10B) are inclined at the same angle (θ) to opposite sides to each other.

5. The tire (1) according to any one of claims 2 to 4, wherein the belt cords (10) further include a third belt cord (10C) having the steel single wire (11) having the short diameter direction oriented along the thickness direction of the belt ply (9).

## Patentansprüche

1. Gürtellage (7) für einen Reifen (1), wobei die Gürtellage (7) mindestens eine Gürtelschicht (9) umfasst, wobei
die Gürtelschicht (9) mehrere Gürtelkorde (10) aufweist, die einen einzelnen Stahldraht (11) mit einer flachen Querschnittsform umfassen, und
der einzelne Stahldraht (11) in zumindest einem der Gürtelkorde (10) eine Richtung mit kurzem Durchmesser aufweist, die bezogen auf eine Dickenrichtung der Gürtelschicht (9) um einen Winkel (Θ) von 10 bis 35 Grad geneigt ist,
der einzelne Stahldraht (11) in der Querschnittsform einen kurzen Durchmesser (SD) von 0,15 bis 0,42 mm aufweist,
der einzelne Stahldraht (11) in der Querschnittsform ein Verhältnis (SD/LD) von 0,70 oder weniger zwischen einem kurzen Durchmesser (SD) und einem langen Durchmesser (LD) aufweist,
die Gürtelkorde (10) einen ersten Gürtelkord (10A) mit dem einzelnen Stahldraht (11), dessen Richtung mit kurzem Durchmesser bezogen auf die Dickenrichtung der Gürtelschicht (9) zu einer ersten Seite geneigt ist, und einen zweiten Gürtelkord (10B) mit dem einzelnen Stahldraht (11) umfassen, dessen Richtung mit kurzem Durchmesser bezogen auf die Dickenrichtung der Gürtelschicht (9) zu einer zweiten Seite geneigt ist, die der ersten Seite entgegengesetzt ist,
fünf Gürtelkorde (10), die in der Reifenaxialrichtung benachbart sind, mindesten einen ersten Gürtelkord (10A) und mindestens eine zweiten Gürtelkord (10B) umfassen und
die Gürtelschicht (9) ein Abdeckgummi (12) aufweist, das die Gürtelkorde (10) überdeckt, und
das Abdeckgummi (12) einen komplexen Elastizitätsmodul (E*) bei 70 Grad Celsius von 7 bis 20 MPa aufweist, wobei der komplexe Elastizitätsmodul gemäß dem japanischen Industriestandard JIS-K6394 unter den Bedingungen einer Anfangsdehnung von 10%, einer Amplitude der dynamischen Dehnung von ± 1%, einer Frequenz von 10 Hz und einem dehnbaren Verformungsmodus gemessen wird.

2. Reifen (1), der einen Laufflächenabschnitt (2) und eine Gürtellage (7) nach Anspruch 1 umfasst, die in dem Laufflächenabschnitt (2) angeordnet ist.

3. Reifen (1) nach Anspruch 2,
wobei der einzelne Stahldraht (11) in der Querschnittsform ein Verhältnis (SD/LD) von 0,5 oder mehr zwischen einem kurzen Durchmesser (SD) und einem langen Durchmesser (LD) aufweist.

4. Reifen (1) nach Anspruch 2 oder 3,
wobei der einzelne Stahldraht (11) des ersten Gürtelkords (10A) und der einzelne Stahldraht (11) des zweiten Gürtelkords (10B) um den gleichen Winkel (Θ) zu einander entgegengesetzten Seiten geneigt sind.

5. Reifen (1) nach einem der Ansprüche 2 bis 4,
wobei die Gürtelkorde (10) ferner einen dritten Gürtelkord (10C) mit dem einzelnen Stahldraht (11) umfassen, dessen Richtung mit kurzem Durchmesser entlang der Dickenrichtung der Gürtelschicht (9) ausgerichtet ist.

## Revendications

1. Couche de ceinture (7) pour un pneumatique (1), la couche de ceinture (7) comprenant au moins une nappe de ceinture (9), dans laquelle
la nappe de ceinture (9) inclut une pluralité de câblés de ceinture (10) incluant un fil unique en acier (11) ayant une forme de section transversale plate, et
dans l'un au moins des câblés de ceinture (10), le fil unique en acier (11) a une direction de diamètre court inclinée sous un angle (8) de 10 à 35 degrés par rapport à une direction d'épaisseur de la nappe de ceinture (9),
le fil unique en acier (11) a un diamètre court (SD) de 0,15 à 0,42 mm dans la forme de section transversale,
le fil unique en acier (11) a un rapport (SD/LD) de 0,70 ou moins entre un diamètre court (SD) et un diamètre long (LD) dans la forme de section transversale,
les câblés de ceinture (10) incluent un premier câblé de ceinture (10A) dont le fil unique en acier (11) a la direction de diamètre court inclinée vers un premier côté par rapport à la direction d'épaisseur de la nappe de ceinture (9) et un deuxième câblé de ceinture (10B) dont le fil unique en acier (11) a la direction de diamètre court inclinée vers un second côté opposé au premier côté par rapport à la direction d'épaisseur de la nappe de ceinture (9),
cinq câblés de ceinture (10) adjacents dans la direction axiale du pneumatique incluent au moins un premier câblé de ceinture (10A) et au moins un deuxième câblé de ceinture (10B), et
la nappe de ceinture (9) inclut un caoutchouc d'enrobage (12) couvrant les câblés de ceinture (10), et
le caoutchouc d'enrobage (12) a un module d'élasticité complexe (E*) à 70 degrés Celsius allant de 7 à 20 MPa, le module d'élasticité complexe étant mesuré conformément à la norme industrielle japonaise JIS-K6394 dans les conditions suivantes : contrainte initiale de 10 %, amplitude de contrainte dynamique de ± 1 %, fréquence de 10 Hz et mode de déformation en traction.

2. Pneumatique (1) comprenant une portion formant bande de roulement (2) et une couche de ceinture (7) selon la revendication 1 disposée dans la portion formant bande de roulement (2).

3. Pneumatique (1) selon la revendication 2, dans lequel le fil unique en acier (11) a un rapport (SD/LD) de 0,50 ou plus entre un diamètre court (SD) et un diamètre long (LD) dans la forme de section transversale.

4. Pneumatique (1) selon la revendication 2 ou 3, dans lequel le fil unique en acier (11) du premier câblé de ceinture (10A) et le fil unique en acier (11) du deuxième câblé de ceinture (10B) sont inclinés sous le même angle (θ) vers des côtés opposés l'un à l'autre.

5. Pneumatique (1) selon l'une quelconque des revendications 2 à 4, dans lequel les câblés de ceinture (10) incluent en outre un troisième câblé de ceinture (10C) ayant le fil unique en acier (11) dont la direction de diamètre de court est orientée le long de la direction d'épaisseur de la nappe de ceinture (9).
